# EUROPEAN PATENT APPLICATION

(11) **EP 0 982 909 A2**
(43) Date of publication of application: **01.03.2000**
(21) Application number: 99306832.9
(22) Date of filing: 27.08.1999
(51) Int. Cl.: H04L 29/06, H04L 12/26

(54) **Internet protocol flow detection**

(30) Priority: 28.08.1998 GB 9818873; 01.09.1998 GB 9819175; 08.10.1998 GB 9821994
(71) Applicant: Nokia OYJ, 02150 Espoo (FI)
(72) Inventor: Soderlund, Tom, 00200 Helsinki (FI); Immonen, Jukka, 02730 Espoo (FI)
(74) Representative: Jeffery, Kendra Louise

(57) **Abstract**

An IP flow detector (51; 52) is provided which supports differentiated services in an IP network, such as a wireless IP network. In one embodiment, the detector is arranged to detect a flow type which can be identified by fields in the basic IPv6 header and an extension header. Likewise a method of detecting such IP flows is provided.

## Description

The present invention relates to a mechanism for differentiating between internet protocol (IP) packets, namely IP flow detection. In particular, it relates to a method and apparatus which provide flow detection in packet data transmission.

Such a mechanism is used, for example, in wireless internet protocol (IP) networks.

The term "Internet" is commonly used to describe an information resource from which information can be retrieved from a data processor, such as a personal computer (PC). The data processor communicates with the other nodes in the network via e.g., a modem hooked to a telecommunication network. The data processor may be connected to the network also by other means like a direct data network connection. This information resource is worldwide. The Internet is made operable by defining certain data communication standards and protocols, such as TCP (transfer control protocol), UPD (user datagram protocol), and IP (Internet protocol), which are used for controlling data transmission between numerous parts of the Internet. The TCP is involved with providing communicating processes means to transfer a stream of data reliably. The UDP is involved with providing communicating processes means to transfer datagrams reliably. The IP is the common ground for communicating between the nodes in the IP network. The lower part of IP can be modified to suit specific network environments while the upper part of IP as well as the TCP and the UDP above it remain the same everywhere. This way a global uniform network is possible although it has been built on local networks that are based on different technologies. The currently used versions of the Internet protocol are IPv4 and IPv6. IPv4 is defined in RFC791 and IPv6 is defined in the Ipv6 specification dated 8^{th} June 1998.

Thanks to the growing popularity of open data systems, the Transmission Control Protocol/Internet Protocol (TCP/IP) communication protocol has become a generally used protocol whereby computers of different sizes and brands can communicate with each other. TCP/IP support is currently available for almost any operating system and almost any local network environment. The network layer protocol of TCP/IP, the Internet Protocol IP, is intended to be routed by gateways, i.e. routers. The routing is conducted by means of IP addresses and routing tables. Thanks to the TCP/IP protocol suite, the applications running in the hosts connected to the Internet are able to communicate even though the hosts were located in different continents or even space.

The rapid evolution of the Internet services has created a strong need for broadband networks with high data rate and Quality of Service (QoS). Video broadcasting and other multimedia distribution services are evolving rapidly. The users are willing to access these services also in the wireless environment. Currently, in the fixed IP network, IP packets are typically sent as best effort data traffic. In the case of network congestion, all data streams are handled with equal priority which may have a dramatic effect on multimedia services. Two main problems exist: firstly the current wireless networks do not provide sufficient QoS mechanism, and secondly, the existing wireless networks are not capable of serving several simultaneous connections with high data rate and QoS requirements. To meet the increased customer requirements, new wireless broadband network techniques are required.

The Internet Engineering Task Force (IETF) is an organisation involved with the development of the architecture, protocols and operation of the Internet. IEFT has defined two different QoS concepts: integrated and differentiated services, for providing a standard mechanism for supporting real time applications in IP networks. Integrated services is based on an abstract flow model with reservation protocol (RSVP, RFC2205) and admission control. The network reserves statically resources for real time connections in each network device, and hence is not optimally efficient. Consequently the differentiated services concept was developed. This concept is based on the use of an IP header for indicating the requested service class (called per-hop behaviour) for the packet. As a result, each IP packet carries QoS information and no reservations are required. Whilst the IETF suggest the use of an IP header for indicating the QoS, the actual packet handling mechanisms will not be standardised.

One mechanism used for differentiating between IP packets is IP flow detection. The flow detection concept comprises the monitoring of IP traffic to be able to detect packets flowing frequently between two communicating processes (IP applications). Such packets establish an IP flow.

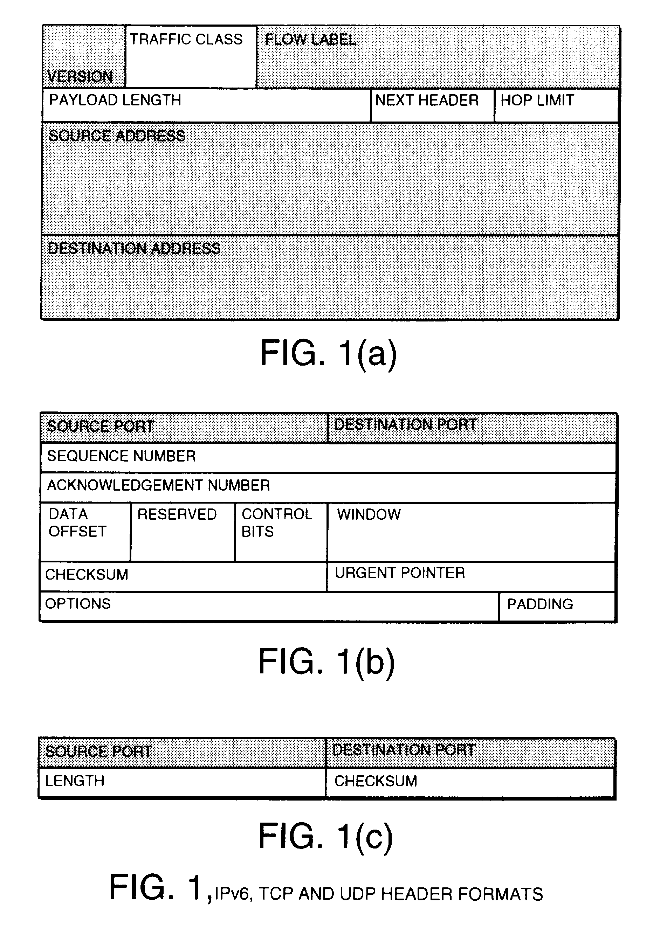

The flow detection entity (called the flow classifier) monitors the IP packets and some specific IP header fields in detecting the flows. There are several header fields (parameters) which can be used in flow detection. Figures 1(a) to (c) present the IPv6, TCP and UDP protocol headers respectively and the header fields applicable to flow detection.

As can be seen from Figure 1(a), the IPv6 header block consists of the following elements:

| | |
|---|---|
| Version | IP version of 4 bits (=6) |
| Traffic Class | 8 bit priority, |
| Flow label | 20 bit label for identifying the connection in the application layer, |
| Payload length | 16 bit integer indicating the length of the payload, *i.e.* the length of the packet after the header in bytes, |
| Next header | data of 8 bits determining the header immediately following the IPv6 header, |
| Hop limit | integer counter of 8 bits which is reduced by one at the each device (node) which transmits the packet further; the packet is rejected if the value is reduced to zero, |
| Source address | the 128 bit address of the sender of the original packet, |
| Destination address | the 128 bit address of the intended recipient. |

The header is followed by the payload block, *i.e.* the actual information to be transmitted.

In this IP version, if a packet is provided with a non-zero IPv6 flow label, then the flow label in the IPv6 header together with the source address is a flow identifier (first flow identification type), and directly distinguishes the different IP sessions. The flow label is used by the applications to "mark" the packets belonging to their IP flow. However, this flow label is not available in all IP headers (e.g. IPv4). Moreover, if a system does not support it, the flow label is set to zero. In these instances, fields of an upper layer protocol header can be used as flow identifiers instead, to distinguish different IP sessions. For example, as is shown in Figure 1b, an alternative flow ID can include TCP/UDP source and destination port information to distinguish different IP sessions together with source address and destination address from the IP header (second flow identification type).

The present inventors have realised the need for a method of flow detection which provides an improved flexibility (for example so its use is not solely dependent upon the use of current protocols).

According to one aspect of the present invention there is provided a method for detecting an IP flow in flow label deprived packet data transmission, comprising monitoring a set of fields in a lower layer header of the packets to detect an IP flow, wherein monitoring the set of fields comprises monitoring an source address field; monitoring a destination address field; and monitoring a further field indicative of packet management criteria. A lower layer header is generally one from OSI layers 1 to 3 (physical, data link and network layers) and may for example be an IP header or an IP extension header. This IP flow detection method supports the aforementioned QoS concepts for example, when an upper layer header is not available. Consequently, it provides effective flow management.

According to another aspect of the present invention, there is provided a method of detecting an IP flow in packet data transmission, comprising selecting a set of fields to be monitored to detect an IP flow; and monitoring the selected set of fields in a header of the packets to detect an IP flow; wherein the set of fields is selected from a first set comprising a flow label field and a source address field from a lower layer header of the packets; a second set comprising a source address field and a destination address field from a lower layer header of the packets and a source port field and a destination port field from an upper layer header of the packets; and a third set comprising the source address field, destination address field, and a further field indicative of packet management criteria (other than the flow label field) from the lower layer header of the packets. This IP flow method uses different options, depending on what headers are available. Again, these options provide a flexible method of providing effective flow management.

Preferably the set of fields are selected in the aforementioned order, as they are ranked having consideration to the complexity and load in routing devices. That is, the lower the priority the increased complexity and load in the routing devices.

The method may be used for detecting an IP flow encrypted packet data transmission. This is one example when not all the headers are accessible, and in which the present invention is particularly useful. In such a case, the step of monitoring the further field comprises monitoring a security field, such as a security parameter index of the encapsulated security payload header.

According to a further aspect of the present invention, there is provided the use of a set of fields in a lower layer header of data packets as a flow identifier, wherein the set of fields comprises source and destination address fields and a field indicative of packet management criteria (other than a flow label field).

According to yet another aspect of the present invention, there is provided an IP flow detector which implements any of the methods above.

Embodiments of the present invention will now be described, by way of example, of which:
Figure 1a illustrates an IPv6 header format;
Figure 1b illustrates a TCP header format;
Figure 1c illustrates a UDP header format;
Figure 2 illustrates an IPv6 header format when encapsulated security payload (ESP) is used; and
Figure 3 illustrates a general radio system architecture in which the method and apparatus of the present invention may be implemented.

In the present invention, flow detection is made more flexible by the provision of an alternative flow identifier to the first and second types mentioned above, which caters for the situation where a flow label and/or port addresses are not available, and yet still supports differentiated services. A flow label may not be available for the following reasons, for example. Firstly, the system may be using a protocol which does not define a flow label field (e.g. IPv4). Secondly, the system may not support flow labels, despite using a protocol which defines a flow label field (e.g. IPv6). In this latter case, the flow label value is set to zero.

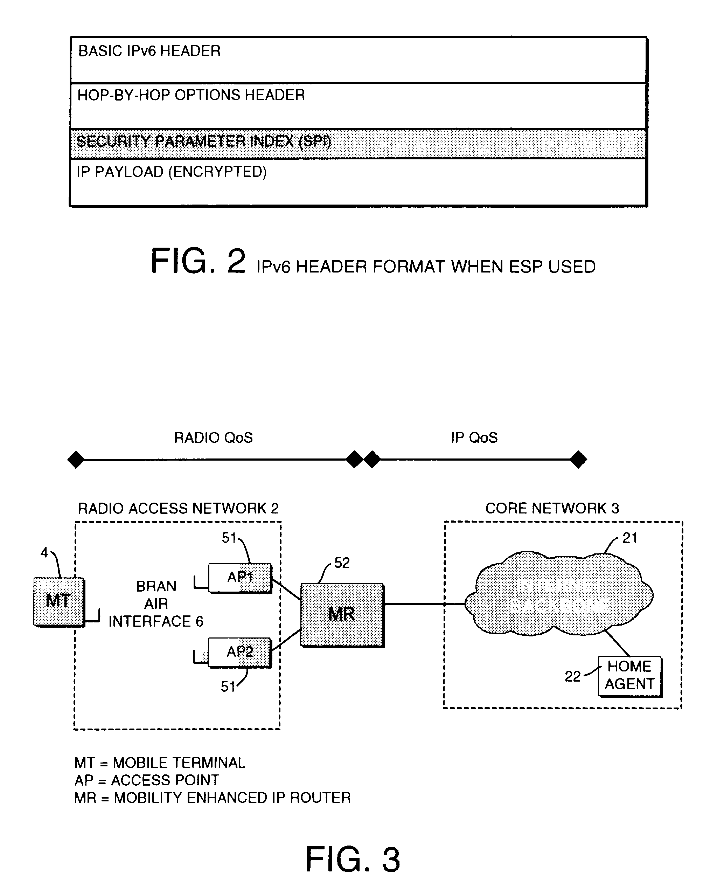

Further, an example of a situation when neither a flow label nor port addresses are available, may be when the data packet is encrypted for security reasons. Encryption of IP packets is discussed in the draft on IP Encapsulating Security Payload (ESP) by Stephen Kent and Randall Atkinson, dated March 1998. Figure 2 of the accompanying drawings illustrates an ESP extension header.

IP encryption utilises Encapsulating Security Payload (ESP), ESP provides means for encrypting the contents of an IP packet. When ESP based encryption is used (transport-mode ESP), the processing nodes can interpret only the basic IP header and the extension headers preceding the ESP header. This is because transport-mode encapsulates a transport-layer (e.g., UDP, TCP or ICMP) frame inside the ESP. In transport-mode ESP, the ESP header follows the end-to-end headers (e.g., Authentication Header) and immediately precedes an upper layer (e.g., UDP, TCP, ICMPv6) header.

The encrypted data includes both the protected ESP header fields and the protected user data, which is either an entire IP packet or an upper-layer protocol frame (e.g., TCP or UDP). Thus, the second flow identification type cannot be used because there is no port information available. If, in addition, the flow label is not set, effective flow management cannot be achieved.

In a preferred embodiment of the present invention, an alternative flow identifier is used which makes use of a source address field, destination address field of the basic IPv6 header and also a further field which is indicative of packet management criteria, and thus provide effective flow detection. On their own, the source and destination addresses do not provide any differentiation and thus do not provide efficient and effective flow management. (Hosts may have several applications running, each application requiring different treatment in the network). In contrast, in the present example of the invention, the Security Parameter Index (SPI) value from the ESP header is used for flow identification. This header is indicative of packet management criteria.

The SPI value together with the source and destination addresses can be used to identify different IP flows. The SPI field is a 32-bit arbitrary value which together with the destination IP address and security protocol (here ESP) identifies the Security Association for the packet. Figure 2 shows the IP packet format when ESP encryption is used (the IPv6 header fields applicable to flow detection are highlighted in Figure 1).

When IP encryption is applied (transport-mode ESP), only the information contained in the basic IPv6 header and the extension headers preceding the ESP header can be used for flow detection. From the basic header, flow label, source address and destination address parameters are usable. If flow label values are not used, flow identification granularity can be improved by using the SPI value from the ESP header, together with the source and destination IP addresses to identify a flow. That is, the information available to differentiate IP flows from each other can be increased.

Thus the solution for detecting flows also for secured IP traffic to provide a third flow identification type as follows:
- type 3: source address + destination address +[SPI]

Instead of using only the source and destination IP addresses to identify the flow the packet belongs to, it is proposed to also use the SPI value, if there is one available in the extension headers. The flow identification granularity depends on the granularity of the respective Security Association that is identified by the SPI value, the destination IP address and the security protocol (ESP). For example, there may exist several Security Associations between two hosts or only one Security Association. If there was only one Security Association between the two hosts all the different TCP flows would be detected by the proposed algorithm as only one flow because the identifying information in the packets of these flows would be the same (same IP addresses and same SPI value in the ESP header). If however there are several Security Associations between these two hosts e.g., per TCP port basis, the proposed flow detection algorithm would detect each TCP flow as a separate flow because the packets of each flow would have different identifying information (same IP addresses, different SPI values in the ESP header).

The function that handles the flow detection is called the flow classifier. The flow classier decides when subsequent IP packets with the same flow identifying information should be considered as a flow. Usually some measurements are made at this point to ensure that the packets that belong to the detected flow will be handled specially. For example, in the case of a wireless media, the flow could be bound to a radio connection.

The flow classifier decides also when the flow should be terminated. The flow will be terminated when no packets with the same flow identifying information are detected within a reasonable time. At this point the resources will be freed that were reserved for the flow when it was detected. For example, in the case of a wireless media, the radio connection would be freed that was reserved for the packets that belonged to the terminated flow.

Flow classification works so that the IP traffic and specific header fields are monitored in order to detect new flows. In a preferred embodiment of the present invention, the classifier specifies a number of different flow types which can be used, depending on the IP and transport protocol header fields. For example, the following four different flow types can be specified:
1. Flows identified by flow labels (type 1)
2. Flows identified by TCP/UDP port numbers (type 2)
3. Flows identified by the source and destination IP addresses + the security parameter index (type 3)
4. Flows identified by the source and destination IP addresses (type 4)

The first option can be applied if the applications are able to use the IPv6 flow label to mark the different IP sessions. If such advanced applications are not available, and if TCP/UDP port information is available, flow type 2 is selected. In case IP encryption is used, the second option cannot be applied since the port information is encrypted. In such a case, security parameter index (SPI) is used with source and destination addresses to identify possible flows. If no TCP/UDP port information, flow labels or SPI parameters are available, the only option is to look just for the source and destination IP addresses and separate flows between hosts (the first two options separate flows in the granularity of communicating processes).

Each flow type specifies the set of fields from the IP packet header that are used to identify a flow. The set of the header fields identifying a particular flow is called the flow identifier. Depending on the flow type, the flow identifiers contain the following fields:
- Type 1: source address + flow label
- Type 2: source address + destination address + protocol (next header) + source port + destination port
- Type 3: source address + destination address + security parameter index (SPI)
- Type 4: source address + destination address

In this embodiment, the flow types have been prioritised in the above order to minimise the required load and processing. The first case can be applied when the packets have a nonzero IPv6 flow label, distinguishing directly the different IP sessions. This uses the least processing. As mentioned above, if the flow label is not available but TCP/UDP port information is available instead, the second case is selected. However, this second option requires UDP/TCP header processing allowing efficient flow management but at the same time increasing the complexity and load in routing devices. If neither flow label nor TCP/UDP port information is available, the flows can be identified by the source and destination addresses and the SPI. Since this SPI value is in an extension header, it again requires an increased load over type 1.

A flow detector can differentiate between these four flow types, and based on the flow classification mechanism bind each flow type to a flow. Three different flow classifier mechanisms which may be applied in the present system are:
- X/Y classifier, meaning X packets (with the same flow identifier) in Y seconds resulting in a new flow
- Protocol classifier which simply assigns all TCP packets to flows
- Port classifier, using transport layer port numbers to decide which flows to bind.

The X/Y classifier is the preferred choice as it is the only one which supports flow types 1 and 2.

Typical flow detection criteria for the X/Y classifier are listed in table 1 below. The table gives values for X and Y in a function of different amount of flow space available (e.g. the flow space may refer to the amount of radio connections required in a wireless internet system). Expected performance means the portion of packets switched to flows.

As can be seen, the values are somewhat different in different environments. Therefore, it should be possible to change easily the values of X and Y in the WFMP implementation.

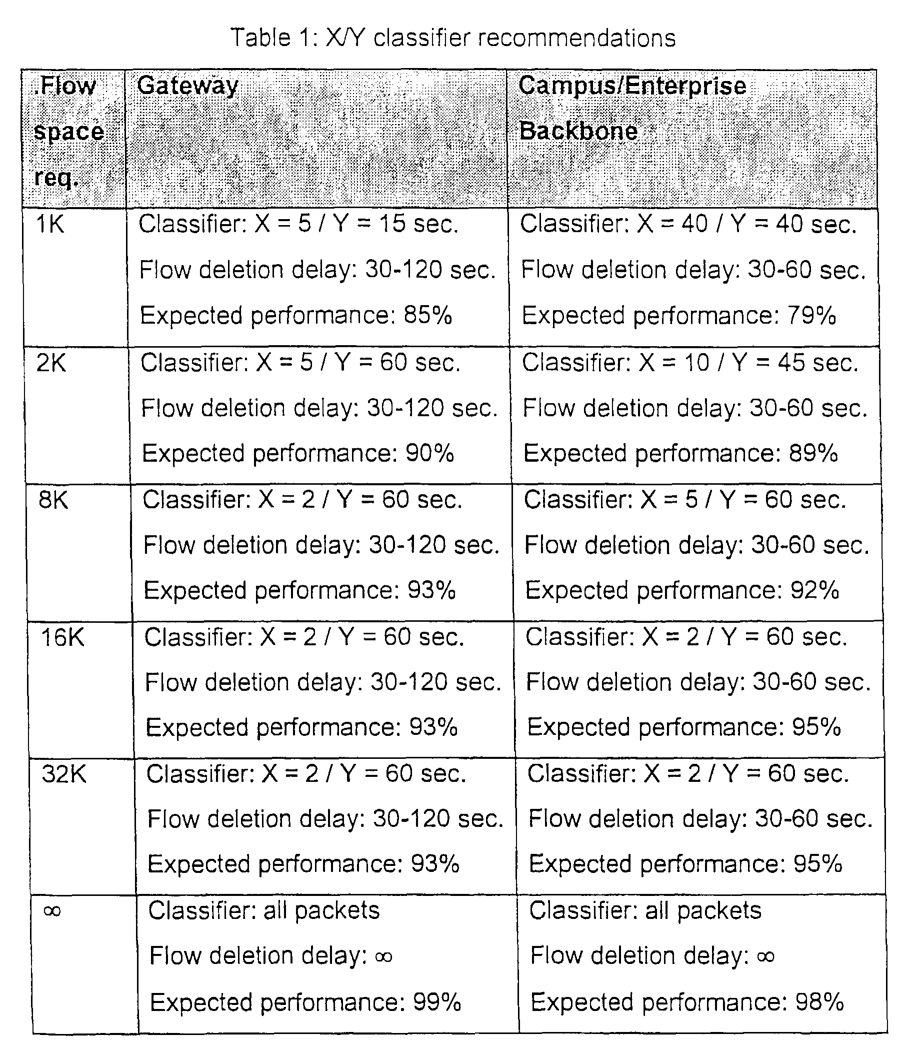

Since the establishment of a TCP connection always contains at least three packets used, and since the flow detection should be based on actual data packets, a minimum value of six for X is considered appropriate (third data packet triggering the flow detection). The value for Y could be 30 seconds.

A flow is deleted after some constant number of seconds of inactivity. When flow classifier detects a new flow, it starts the flow inactivity timer. This timer is re-started each time a packet belonging to that flow is received. Once the timer expires, the flow identifier is removed from the list of monitored packets. Finally, the IP flow is released.

One implementation of the internet protocol is in wireless networks. One such network is shown in Figure 3 of the accompanying drawings. The broadband radio access network 1 (BRAN) is composed of a radio access network 2 having mobile terminals 4, access points 51, 51' and an air interface between, plus a mobility enhanced IP router 52(M-Router). The BRAN is connected to the core IP network which comprises the internet backbone 21 and home agents 22.

The radio access network 2 (RAN) implements all the radio dependent functionality such as radio resource management, setup and release of wireless flows, handovers and packet compression. It contains mobile terminals and access points. The mobile terminal 4 is the user's communication device for accessing wireless Internet services, and is the end point of the Internet and radio access network control protocols. The access point 51,51' implements all the radio dependent control functionality, such as radio resource management. It includes radio resource management and radio link control functions. The corresponding network elements in GSM are the base transceiver stations (BTS/TRX) and base station controller (BSC).

The M-Router 52 creates the wireless IP sub-network managing one or more access points. The M-Router handles the mobility and location management of the terminals that are registered to the access points 51,51'. The M-Router provides IP mobility services, such as DHCP (dynamic host configuration protocol). DHCP is used for allocating IP addresses for the terminals. The corresponding element to the M-router in the GSM network is the gateway GPRS support node (GGSN). The access points 51, 51' and the terminals 4 with an IP stack that belong to the same IP sub-network (use the same M-ROUTER) create a logical link.

The core network 3 comprises a home agent 22 which resides in the home network of an associated terminal 4 and is accessed through standard IP gateways. Typically home agent 22 is implemented as part of the M-Router 52 of the home network. However, it can also be a separate entity (e.g. PC host). The home agent 22 can contain user authentication information and a billing database. It resembles the home location register (HLR) in GSM.

In a preferred embodiment the M-router 52 provides IP flow classification. The network can assign certain quality of service characteristics for a flow, which are required for multimedia service implementations in IP networks. For instance, a particular flow can be prioritised in the router. In the present embodiment, the M-router maintains IP flow QoS characteristics in the air interface and permits the prioritisation of different IP packet (flows) in the radio link. It does this by mapping the detected IP flows into corresponding radio flows for transmission over the RAN. These radio flows have corresponding identifiers and QoS characteristics, and are further discussed in Finnish patent application number 980191 published on 28^{th} July 1999.

Alternatively, the IP flow classification could be positioned into the access point controller or even into each access point.

Moreover the criteria used for flow classification in the preferred embodiment to detect an IP flow is not essential to the invention. If IP flow detection is required, then various other criteria can be used. For example, the flow classifier can be dynamically configured by changing the value of the packets/sec detection criteria parameter.

The present invention includes any novel feature or combination of features disclosed herein either explicitly or any generalisation thereof irrespective of whether or not it relates to the claimed invention or mitigates any or all of the problems addressed.

In view of the foregoing description it would be evident to a person skilled in the art that various modifications may be made within the scope of the invention. For example, QoS characteristics (such as priority/real time/accuracy) were given as the packet management criteria in the preferred embodiment. However, packet management criteria can be based on other factors for which the network requires differentiation.

## Claims

1. A method for detecting an IP flow in flow label deprived packet data transmission, comprising monitoring a set of fields in a lower layer header of the packets to detect an IP flow, wherein monitoring the set of fields comprises:
monitoring an source address field;
monitoring a destination address field; and
monitoring a further field indicative of packet management criteria.

2. A method of detecting an IP flow in packet data transmission, comprising:
selecting a set of fields to be monitored to detect an IP flow; and
monitoring the selected set of fields in a header of the packets to detect an IP flow;
wherein the set of fields is selected from:
a first set comprising a flow label field and a source address field from a lower layer header of the packets;
a second set comprising a source address field and a destination address field from a lower layer header of the packets and a source port field and a destination port field from an upper layer header of the packets; and
a third set comprising the source address field, destination address field, and a further field indicative of packet management criteria other than the flow label field from the lower layer header of the packets.

3. A method as claimed in claim 2, wherein the set of fields are selected on the basis of priority, in which the first set has the highest priority, followed by the second set, and then the third set.

4. A method as claimed in claim 2 or 3, wherein selection of the set of fields to be monitored is determined by the availability of the fields.

5. A method as claimed in any of claims 2 to 4, wherein monitoring the third set of fields comprises:
monitoring an source address field;
monitoring a destination address field; and
monitoring a further field indicative of packet management criteria other than the flow label field.

6. A method as claimed in claim 1 or 5 for detecting an IP flow in encrypted packet data transmission, wherein monitoring the further field comprises monitoring a security field.

7. A method as claimed in claim 6, wherein the encryption utilises encapsulating security payload, and monitoring the further field comprises monitoring a security field in an encapsulating security payload header.

8. A method as claimed in claim 7, wherein monitoring the further field comprises monitoring a security parameter index of the encapsulating security payload header.

9. A method as claimed in any preceding claim, wherein monitoring the set of fields comprises monitoring the set of fields in the basic and extension headers of the packets.

10. Use of a set of fields in a lower layer header of data packets as a flow identifier, wherein the set of fields comprises source and destination address fields and a field indicative of packet management criteria other than a flow label field.

11. An IP flow detector for detecting an IP flow in flow label deprived packet data transmission, comprising a monitor for monitoring a set of fields in a lower layer header of the packets to detect an IP flow, wherein the monitoring means comprises:
a monitor for monitoring an source address field;
a monitor for monitoring a destination address field; and
a monitor for monitoring a further field indicative of packet management criteria.

12. An IP flow detector for detecting an IP flow in packet data transmission, comprising:
a selector for selecting a set of fields to be monitored to detect an IP flow; and
a monitor for monitoring the selected set of fields in a header of the packets to detect an IP flow;
wherein the selector selects the set of fields from:
a first set comprising a flow label field and a source address field from a lower layer header of the packets;
a second set comprising a source address field and a destination address field from a lower layer header of the packets and a source port field and a destination port field from an upper layer header of the packets; and
a third set comprising the source address field, destination address field, and a further field indicative of packet management criteria from the lower layer header of the packets other than the flow label field

13. A detector as claimed in claim 12, wherein selector selects the set of fields on the basis of priority, in which the first set has the highest priority, followed by the second set, and then the third set.

14. A detector as claimed in claim 12 or 13, wherein the selector determines the set of fields to be monitored on the availability of the fields.

15. A method as claimed in any of claims 12 to 14, wherein the monitor for monitoring the third set of fields comprises:
a monitor for monitoring an source address field;
a monitor for monitoring a destination address field; and
a monitor for monitoring a further field indicative of packet management criteria other than the flow label field.

16. A detector as claimed in claim 11 or 16 for detecting an IP flow in encrypted packet data transmission, wherein the monitor for monitoring the further field is arranged to monitor a security field.

17. A detector as claimed in claim 2, wherein the encryption utilises encapsulating security payload, and the monitor for monitoring the further field is arranged to monitor a security field in an encapsulating security payload header.

18. A detector as claimed in claim 3, wherein the monitor for monitoring the further field is arranged to monitor a security parameter index of the encapsulating security payload header.

19. A detector as claimed in any preceding claim, wherein the monitor for monitoring the set of fields in a lower layer header of the packets to detect an IP flow is arranged to monitor the set of fields in the basic and extension headers of the packets.
